# EUROPEAN PATENT SPECIFICATION

(11) **EP 2 410 203 B1**
(45) Date of publication and mention of the grant of the patent: **12.02.2020**
(21) Application number: 11175126.9
(22) Date of filing: 22.07.2011
(51) Int. Cl.: F16F 9/46, F16F 9/06

(54) **Suspension Damper with Remotely-Operable Valve**
Aufhängungsdämpfer mit fernbetriebenem Ventil
Amortisseur de suspension pour valve actionnée à distance

(30) Priority: 22.07.2010 US 366871 P; 10.09.2010 US 381906 P; 20.01.2011 US 201113010697
(43) Date of publication of application: 25.01.2012
(73) Proprietor: Fox Factory, Inc., Scotts Valley, CA 95066 (US)
(72) Inventor: Marking, John, El Cajon, CA 92021 (US)
(74) Representative: Casbon, Paul Richard

(56) References cited:
- DE-A1- 3 711 442
- JP-A- H0 193 637
- US-A- 5 588 510
- US-A1- 2010 170 760

## Description

### BACKGROUND

### Field of the Invention

Embodiments of the invention generally relate to a damper assembly for a vehicle. More specifically, certain embodiments relate to a remotely-operated valve used in conjunction with a vehicle damper.

Vehicle suspension systems typically include a spring component or components and a dampening component or components. Typically, mechanical springs, like helical springs, are used with some type of viscous fluid-based dampening mechanism and the two are mounted functionally in parallel. In some instances features of the damper or spring are user-adjustable. What is needed is an improved method and apparatus for adjusting dampening characteristics, including remote adjustment. DE 37 11 442 A1 discloses a vehicle damper according to the preamble of claim 1.

### SUMMARY OF THE INVENTION

The invention includes a vehicle damper according to claim 1, comprising a cylinder and a piston; a working fluid within the cylinder; a reservoir in fluid communication with the working fluid to receive working fluid from the cylinder in a compression stroke; and a valve, the valve operable to permit and restrict flow of the working fluid between the cylinder and the reservoir. In another embodiment, a pressurizable portion of a reservoir adjacent a floating piston has an adjustable pressure.

According to some embodiments there is provided a vehicle damper comprising:
a cylinder and a piston;
a working fluid within the cylinder;
a reservoir in fluid communication with the working fluid, the reservoir operable to receive working fluid from the cylinder in a compression stroke; and
a remotely-operable valve, the valve operable to adjust the damping characteristics of vehicle damper by changing the flow of the working fluid through the reservoir, such as by permitting and restricting flow of the working fluid between the cylinder and the reservoir and/or by adjusting gas pressure within a gas chamber of the reservoir, the gas pressure communicated to the working fluid in the reservoir.

Preferably the reservoir includes a housing, the housing enclosing a fluid portion of the reservoir and the valve.

Advantageously, the damper further includes a second valve, the second valve restricting the flow of fluid therethrough.

Preferably the remotely-operable valve includes a valve member and a valve seat for opening and closing a fluid path through the valve.

Advantageously, the valve is openable to a plurality of positions between a fully opened and a closed position.

Preferably, the second valve is also enclosed in the housing.

Advantageously, the damper further includes a passageway through the piston and limiting a flow rate of the working fluid through the piston in at least one direction.

Preferably, the damper further includes a bypass whereby at least some of the working fluid moves from one side of the piston to a second side thereof without utilizing the passageway through the piston.

Advantageously, the piston is solid with no passageway therethrough.

In some embodiments, the arrangement is such that, in use, said working fluid is forced to travel via said reservoir when moving from one side of said piston to the other in compression and re-bound.

Preferably, the remotely-operable valve and the second valve each define an independent fluid pathway into the fluid portion of the chamber.

Advantageously, the second valve includes shims for restricting fluid flow therethrough.

Preferably, the remotely-operable valve is controlled from a location of an operator in the vehicle.

In some embodiments, control is by a manually operable switch having at least two positions.

Advantageously, the switch is located in a passenger compartment of a vehicle.

In some embodiments, control is by an electrically operated solenoid.

In other embodiments control is hydraulic or pneumatic.

Preferably, the valve is operated automatically based upon one of a terrain or vehicle operation variable.

Advantageously, the damper further includes a load transducer for sensing piston rod force created by the damper piston rod.

Preferably, the damper further comprises a transducer arranged to measure an angle associated with the steering wheel of a vehicle.

According to other aspects there is provided a vehicle suspension damper comprising:
a cylinder and a piston assembly comprising a piston;
a working fluid within said cylinder;
a reservoir in selective fluid communication with the cylinder; and
a remotely-operable valve for controlling fluid flow through into the reservoir, the valve movable between an open and closed position through a signal from an operator.

Preferably, the valve is enclosed in a reservoir housing.

According to further aspects there is provided a reservoir for use with a vehicle damper as set out above, the reservoir comprising a housing, the housing enclosing a fluid chamber and a valve assembly, the valve assembly including at least two valves, wherein a first valve is remotely-adjustable between an open and closed position.

Advantageously, the valve assembly is operable with both valves open and with one valve closed.

Preferably, the reservoir further includes an automated feature whereby the first valve assembly is controlled based upon one of a terrain or vehicle operation variable.

According to yet other aspects there is provided a vehicle damper comprising:
a cylinder and a piston;
a working fluid within the cylinder;
a reservoir in fluid communication with the working fluid, the reservoir operable to receive working fluid from the cylinder in a compression stroke, the reservoir including a compressible gas portion having a remotely adjustable pressure therein.

According to still further aspects there is provided a vehicle suspension damper comprising:
a damping cylinder having a compression portion and a rebound portion;
a piston positioned within the damping cylinder and movable in relation thereto, the piston bounding the compression portion on a first side and the rebound portion on a second side;
a reservoir having a movable barrier therein, the barrier partially bounding a gas chamber of the reservoir;
at least one fluid flow path providing fluid communication between the reservoir and at least one of the compression portion and the rebound portion;
a damper valve obstructing at least a portion of the fluid flow path.

In yet other aspects there is provided a method for controlling the damping rate of a vehicle suspension comprising:
flowing a damping fluid from a compression portion of a damping cylinder to a reservoir;
restricting the flow at a first flow rate;
retaining at least some of the flow in the reservoir;
remotely activating a valve operatively connected to the vehicle suspension; and
changing the first flow rate to a second flow rate in response to the remote activation.

According to other aspects there is provided a vehicle suspension damper comprising:
a damping cylinder having a compression portion and a rebound portion;
a piston positioned within the damping cylinder and movable in relation thereto, the piston bounding the compression portion on a first side and the rebound portion on a second side;
a reservoir having a movable barrier therein, the barrier partially bounding a gas chamber of the reservoir;
at least one fluid flow path providing fluid communication between the reservoir and at least one of the compression portion and the rebound portion;
a damper valve obstructing at least a portion of the fluid flow path;
a remotely controlled valve positioned across at least a portion of the fluid flow path and having a first position wherein the at least portion is substantially open and a second position wherein the at least portion is substantially blocked.

According to yet other aspects there is provided a vehicle suspension damper comprising:
a damping cylinder having a compression portion and a rebound portion;
a piston positioned within the damping cylinder and movable in relation thereto, the piston bounding the compression portion on a first side and the rebound portion on a second side;
a reservoir having a movable barrier therein, the barrier partially bounding a gas chamber of the reservoir;
at least one fluid flow path providing fluid communication between the reservoir and at least one of the compression portion and the rebound portion;
a damper valve obstructing at least a portion of the fluid flow path;
a source of pressurized gas in fluid communication, via a gas flow path, with the gas chamber, wherein the gas flow path includes a remotely controlled gas pressure inlet valve.

Preferably the piston comprises a damper flow path communicating between the compression portion and the rebound portion.

Advantageously, the vehicle suspension further comprises a source of pressurized gas in fluid communication, via a gas flow path, with the gas chamber, wherein the gas flow path includes a remotely controlled gas pressure inlet valve.

Preferably the vehicle suspension further comprises a remotely controlled valve positioned across at least a portion of the at least one fluid flow path and having a first position wherein the at least portion is substantially open and a second position wherein the at least portion is substantially blocked.

Advantageously, the damping cylinder comprises a bypass flow path along at least a portion of a cylinder wall.

Preferably, the bypass flow path is in fluid communication with at least one of the compression portion and the rebound portion.

Advantageously, the piston further comprises at least one damping valve.

Preferably, the at least one fluid flow path comprises a first flow path and a second flow path with fluid flowing from the compression portion to the reservoir through the first flow path and from the reservoir to the rebound portion through the second flow path.

Advantageously, wherein the bypass flow path communicates through an aperture with at least one of the compression portion and the rebound portion and fluid transferring between the rebound portion and compression portion passes through the aperture.

Preferably, the reservoir comprises a reservoir bypass along at least a portion of the reservoir wall, the reservoir bypass comprising a fluid communication conduit between at least one of the compression portion and rebound portion and an interior of the reservoir.

Advantageously, the remotely controlled valve comprises an electrically operated solenoid valve.

Preferably, the remotely operated valve is movable to positions intermediate the first and second positions.

According to another aspect there is provided a vehicle suspension damper comprising:
a flow path between a first chamber and a second chamber comprising a first damper;
a second flow path between the first chamber and the second chamber; and
a valve movable with the second flow path.
Preferably, the vehicle suspension damper further comprises a compressible chamber in pressure communication with a damping fluid of the damper, and a source of pressure in pressure communication with the compressible chamber.

According to yet another aspect there is provided a method for closing a bypass comprising:
applying a motive force to a bypass valve;
flowing fluid through a path parallel to the bypass valve;
driving the bypass valve to exert an increased force against a bypass valve seat; and
obstructing the fluid flow in two flow directions relative to the bypass valve.

According to another aspect there is provided a vehicle suspension damper valve comprising:
a piston assembly comprising a piston and an actuator;
a motive source for providing energy to the actuator; and
a valve seat and a valve member, the valve member driven by the piston.

According to yet another aspect there is provided a remotely controllable shock absorber system for a vehicle comprising:
a bypass for bypassing fluid around a damper piston to decrease a dampening effect in the damper;
a remotely actuatable valve for opening and closing the bypass to the flow of fluid.

According to another aspect there is provided a method for closing a bypass comprising:
applying motive force to a bypass valve;
driving the bypass valve to exert an increased force against a bypass valve seat; and
obstructing fluid flow in two flow directions relative to the bypass valve.

According to another aspect there is provided a vehicle comprising any vehicle damper, any vehicle suspension damper, any vehicle suspension damper valve, any piston assembly, or any remotely controllable shock absorber system set out above.

### BRIEF DESCRIPTION OF THE DRAWINGS

So that the manner in which the above recited features can be understood in detail, a more particular description may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1 is a section view showing a suspension damping unit with a reservoir.
Figures 2A and 2B are section views of the reservoir showing valves of a valve assembly in various positions during a compression stroke of the damper.
Figures 3A and 3B are section views of the reservoir showing valves of a valve assembly in various positions during a rebound stroke of the damper.
Figure 4 is a section view of a damper in a compression stroke.
Figure 5 is a section view of the damper of Figure 4 in a rebound stroke.
Figure 6 is a section view of a damper in a compression stroke.
Figure 7 is a section view of the damper of Figure 6 in a rebound stroke.
Figure 8 is a schematic diagram showing a control arrangement for a remotely-operated valve.
Figure 9 is a schematic diagram showing another control arrangement for a remotely-operated valve.

### DETAILED DESCRIPTION

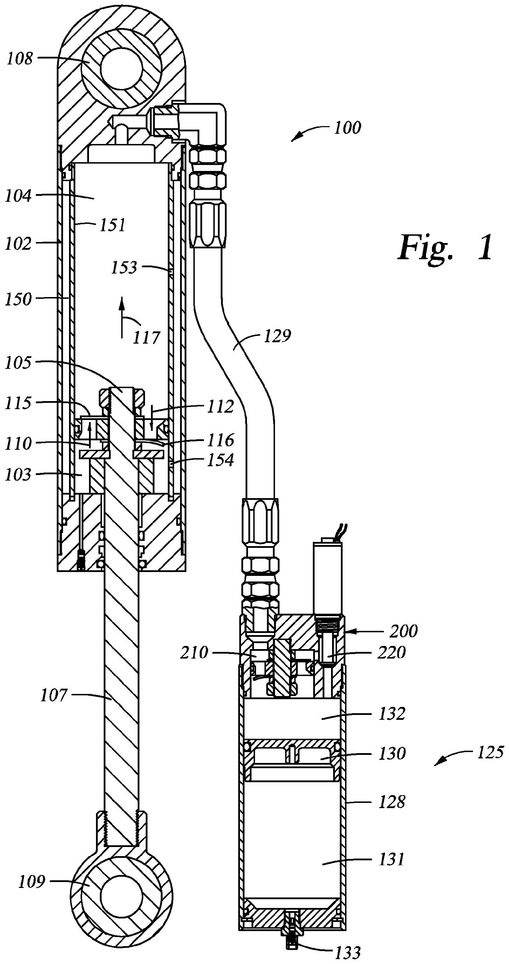

As used herein, the terms "down," "up," "downward," "upward," "lower," "upper" and other directional references are relative and are used for reference only. Figure 1 is a section view of a suspension damper 100. The damper 100 includes a cylinder portion 102 with a rod 107 and a piston 105. In one embodiment, fluid meters from one side of the piston 105 to the other side by passing through flow paths 110, 112 formed in the piston 105. In the embodiment shown, shims 115, 116 are used to partially obstruct flow paths 110, 112 through the piston 105 in two directions. By selecting shims having certain desired stiffness characteristics, the dampening effects caused by the piston 105 can be increased or decreased and dampening rates can be different between the compression and rebound strokes of the piston 105. For example, shims 115 are configured to meter rebound flow from the rebound portion 103 of the cylinder 102 to the compression portion 104 of the cylinder 102 (shown as arrow 110). Shims 116, on the other hand, are configured to meter compression flow from the compression portion 104 of the cylinder 102 to the rebound portion 103 (shown as arrow 112). In Figure 1, the piston is moving in a compression stroke (as shown by directional arrow 117) with the rod 107 and piston 105 moving further into the compression portion 104 and causing fluid to flow from a compression to a rebound side of the cylinder portion 102 via flow path 112. Note that piston apertures (not shown) may be included in planes other than those shown (e.g. other than apertures used by paths 110 and 112) and further that such apertures may, or may not, be subject to the shims 115, 116 as shown (because for example, the shims 115, 116 may be clover-shaped or have some other non-circular shape). In one embodiment, the piston 105 is solid and all damping flow must traverse a flow bypass (e.g. annular space 150 between cylinder 102 and inner cylinder 151) and/or communicate with a reservoir.

In the embodiment of Figure 1, the damper 100 includes an annular bypass formed between a wall of cylinder portion 102 and an inner wall 151 having a slightly smaller diameter that the cylinder wall. In this manner an annular space 150 is provided between the walls. In one embodiment, at least one port 153 on the compression side of the cylinder and another port 154 on the rebound side permit working fluid to pass between the compression and rebound sides without moving through the shimmed paths provided by the piston 105. The bypass feature is utilized so long as the piston is between the two ports in either the compression or rebound strokes.

The lower portion of the rod 107 is supplied with a bushing set 109 for connecting to a portion of a vehicle wheel suspension linkage. An upper portion of the cylinder 102 may be supplied with an eyelet 108 to be mounted to another portion of the vehicle, such as the frame, that moves independently of the first part. A spring member (not shown) is usually mounted to act between the same portions of the vehicle as the damper. As the rod 107 and piston 105 move into cylinder 102 (during compression), the damping fluid slows the movement of the two portions of the vehicle relative to each other due, at least in part, to the incompressible fluid moving through the shimmed paths provided in the piston 105 and/or through the metered bypass. As the rod 107 and piston 105 move out of the cylinder 102 (during extension or "rebound") fluid meters again through shimmed paths and the flow rate and corresponding rebound rate is controlled, at least in part, by the shims 115.

A reservoir 125 is in fluid communication with the damper cylinder 102 for receiving and supplying damping fluid as the piston rod 107 moves in and out of the cylinder 102, thereby variably displacing damping fluid. The reservoir 125 includes a cylinder portion 128 in fluid communication with the compression portion 104 of the damper cylinder 102 via fluid conduit 129 which houses a fluid path between the components. The reservoir 125 also includes a floating piston 130 with a volume of gas in a gas portion 131 on a backside ("blind end" side) of it, the gas being compressible as a fluid portion 132 of the reservoir cylinder 128 fills with damping fluid due to movement of the damper rod 107 into the damper cylinder 102. The pressure of gas in portion 131 can be adjusted with compressed air introduced through gas valve 133 located at a lower end of the reservoir cylinder 128. Certain features of reservoir-type dampers are shown and described in United States Patent No. 7,374,028, which is incorporated herein, in its entirety, by reference. In one embodiment the damper includes an in-line reservoir (e.g. floating piston and gas charge) rather than a remote reservoir as shown in Figure 1. The principles disclosed herein are equally applicable in either case.

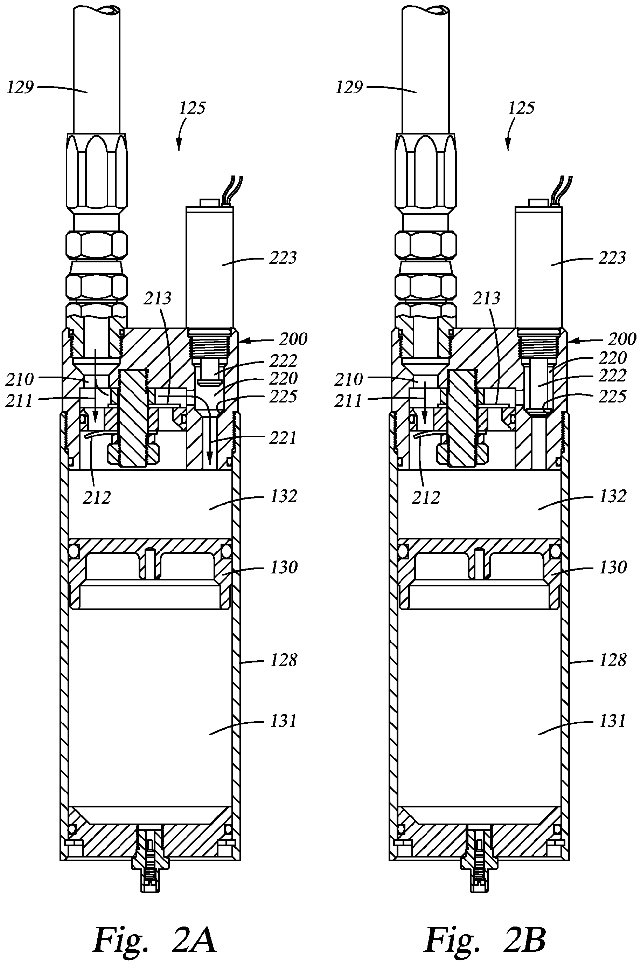

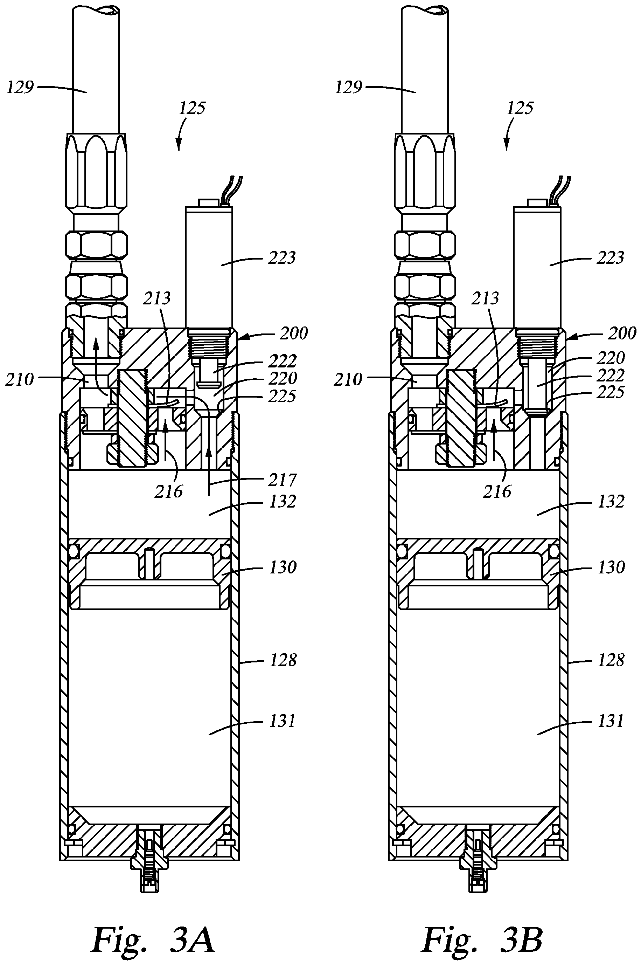

In one embodiment, the damping characteristics of the damper 100 are altered by at least one valve that regulates flow between the compression chamber 104 and the fluid portion 132 of the reservoir 125. In the particular embodiment shown in Figure 1, a reservoir valve assembly 200 includes two valves 210, 220, each of which permits or prevents fluid flow into the reservoir fluid portion 132. The valves 210, 220 are shown in more detail in Figures 2A, B and 3A, B. Figures 2A and 2B are section views of the reservoir 125 showing valves of the valve assembly 200 in various positions during a compression stroke of the damper 100. Figures 3A and 3B are section views of the reservoir 125 showing valves of the valve assembly 200 in various positions during a rebound stroke of the damper 100.

As shown in the Figures, the reservoir valve assembly 200 is threadedly attached at an upper end of the cylinder portion 128 of the reservoir 125 and serves to seal the fluid portion 132. Valve 210 includes a pathway leading into the fluid portion 132 of the reservoir, the pathway including shims 212 functionally like those (115, 116) used in damper piston 105 and designed to offer predetermined resistance to fluid flow passing into the reservoir 125. Another set of shims 213 meter the flow of fluid out of the fluid portion 132 of the reservoir 125 during a rebound stroke of the damper (Figures 3A, B). The flow of fluid into and through valve 210 in a compression stroke is shown by arrow 211. As shown, the flow of fluid has un-seated shims 212 to permit the flow of fluid into the fluid portion 132.

Another valve in the valve assembly 200 is a remotely-operable valve 220 and includes a movable plunger 222 that is seatable on a seat 225. In Figure 2A the valve 220 is open with a fluid path therethrough shown by arrow 221. While the Figure shows both valves open and fluid flow traveling through both, it will be understood that depending upon the design of the system, including the selection of shims, valve 210 might remain closed and fluid might flow only through open valve 220 (or vice versa). In Figure 2B remotely-operable valve 220 is shown in a closed position with the plunger 222 seated upon seat 225. In the embodiment shown, the valve 220 is shifted between an open and closed position by a solenoid 223 located above the valve and capable of receiving an electrical signal and causing the mechanical movement of the plunger 222. In one embodiment, the solenoid 223 operates in a manner that partially closes or partially opens the valve 220, therefore permitting or restricting flow without completely opening or closing the valve (e.g. as in an infinitely variable throttle operating between absolute open and absolute closed positions).

In one embodiment, the solenoid-operated valve 220 is normally open (as shown in Figure 2A) with working or damping fluid permitted to flow through both valves 210, 220 of reservoir valve assembly 200. In the early portion of the compression stroke, additional fluid may also bypass the shims of piston 105 due to the annular bypass 150 with its ports 153, 154 (Figure 1). The foregoing configuration describes a "compliant" damping mode with reduced dampening which is suitable for "plush" shock absorption but which may also allow a so-equipped vehicle to pitch or roll during braking or cornering respectively. As such, compliant damping is sometimes preferable but there are times when a more rigid damping mode is appropriate. In one embodiment, the normally-open solenoid valve 220 may be, at the user's discretion, partially or completely closed as it appears in Figure 2B, to increase a damping rate of the damper 100.

In some instances, it may be desirable to increase the damping rate when moving a vehicle from off-road to on highway use. Off-road use often requires a high degree of compliance to absorb shocks imparted by the widely varying terrain. On highway use, particularly with long wheel travel vehicles, often requires more rigid shock absorption to allow a user to maintain control of a vehicle at higher speeds. This may be especially true during cornering or braking.

In other instances, it is desirable to control/ change dampening characteristics in a rebound stroke of a damper. Figures 3A and B show the operation of the damper 100 with working fluid traveling through the valves 210, 220 of the assembly 200 in a rebound stroke. In Figure 3A, both valves are open to the flow of return fluid. As shown, a fluid path 216 is created through shims 213 of valve 210 and another path 217 through the solenoid-operated valve 220 which is shown in an open position, thereby reducing dampening effects and essentially permitting the shock absorber to retract faster than would otherwise be possible. Such a setting is important in an instance where terrain is encountered that results in a sudden "drop" of the ground away from a wheel or wheels of the vehicle. Figure 3B illustrates the same damper reservoir in a rebound stroke with the remotely-operable valve 220 in a closed position, thereby adding additional dampening to the rebounding piston 105.

One embodiment comprises a four wheeled vehicle having solenoid valve-equipped shock absorbers at each (of four) wheel. The solenoid valve 220 (which may be mechanically, pneumatically, or hydraulically operated instead of solenoid operated) of each of the front shock absorbers may be electrically connected with a linear, motion activated switch (such as that which operates an automotive brake light) that is activated in conjunction with the vehicle brake pedal. When the brake pedal is depressed beyond a certain distance, corresponding usually to harder braking and hence potential for vehicle nose dive, the electric switch connects a power supply to the normally open solenoid in each of the front shocks, thereby closing the valve in those shocks. As such, the front shocks become more rigid during hard braking. Other mechanisms may be used to trigger the shocks such as accelerometers (e.g., tri-axial) for sensing pitch and roll of the vehicle and activating, via a microprocessor, the appropriate solenoid valves for optimum vehicle control.

In one embodiment, a vehicle steering column includes right turn and left turn limit switches such that a hard turn in either direction activates (e.g. closes valve 220) the solenoid on the shocks opposite that direction (for example a hard right turn would cause more rigid shocks on the vehicle left side). Again, accelerometers in conjunction with a microprocessor and a switched power supply may perform the solenoid activation function by sensing the actual g-force associated with the turn (or braking; or throttle acceleration for the rear shock activation) and triggering the appropriate solenoid(s) at a preset threshold g-force.

In one embodiment, a pressure intensifier damper arrangement may be located within the fluid path of the remotely-operable valves 220 such that the solenoid valve controls flow through that auxiliary damper which is then additive with the valve assembly 200. In one embodiment the valve assembly 200 comprises a pressure intensifier (such as described in U.S. Patent No. 7,374,028, which is incorporated, entirely, herein by reference). In one embodiment one or both of the valves 210, 220 comprise standard shim-type dampers. In one embodiment one or both of the valves 210, 220 include an adjustable needle for low speed bleed. In one embodiment a blow off (e.g. checking poppet-type or shim) is included in one of the flow paths associated with the valves 210, 220.

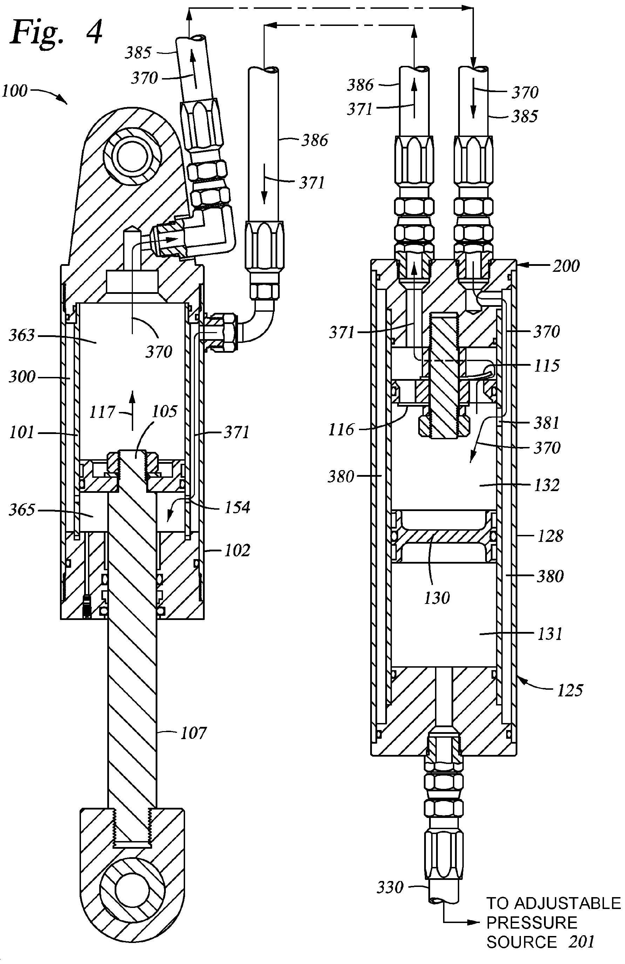

Other embodiments are illustrated in Figures 4-7. For convenience, similar components are labeled with the same numbers as components in previous embodiments. Figure 4 is a section view of a damper 100 in a compression stroke. Damping fluid is moved between compression chamber 363 and rebound chamber 365 via compression line 385, reservoir 125, and rebound line 386. The damper 100 includes a main cylinder 102 having a piston 105 and shaft 107. In the case of the embodiment of Figure 4, the piston is solid and fluid is moved in each direction in both the compression and rebound strokes of the damper. In another embodiment, the piston could include shims to meter fluid between the compression 363 and rebound 365 sides of the cylinder 102. Movement of the piston 105 into the compression portion 363 is shown by directional arrow 117. The cylinder also includes a bypass structure formed by an annular area 300 between the outer wall 102 of the cylinder and an inner wall 101. A port 154 leading from the annular area 300 to the rebound portion 365 of the chamber permits fluid flow into the rebound portion from the reservoir as will be explained. In one embodiment, the reservoir 125 is equipped with a cylinder portion 128 housing a fluid portion 132 and a presurizable portion 131 separated by a floating piston 130. A valve assembly 220 enclosed in the reservoir housing operates to meter fluid into and out of the reservoir 125.

Still considering Figure 4, damping fluid is moved by solid piston 105 out of compression chamber 363 along the compression feed flow path 370 and into fluid portion 132 of reservoir 125 via compression line 385, an annulus 380 and a port 381. Simultaneously, the pressure in rebound chamber 365 decreases as solid piston 105 moves in compression. Damping fluid is correspondingly forced through the shims 115 of the valve assembly 200 and along the compression return flow path 371 to the rebound portion 365 (which includes travel through rebound line 386, internal annulus 300, and port 154).

As the compression stroke progresses, the volume of the shaft 107 incurring into the rebound/ compression chamber 365/363 is accommodated by movement of floating piston 130 in the reservoir 125 and associated compression of pressurizable portion 131. As pressure in portion 131 increases, so does damping force of the shock absorber as increased pressure is communicated to the damping fluid by movement of the floating piston 130 (the damping fluid increases in pressure and affects change in the pressure of, in one embodiment, a gas in portion 131). Increased damping fluid pressure acts against the piston area of the solid piston 105, thereby increasing the force on the shock absorber necessary cause compression of the shock absorber. In other words the shock absorber increasingly resists compression as it is compressed.

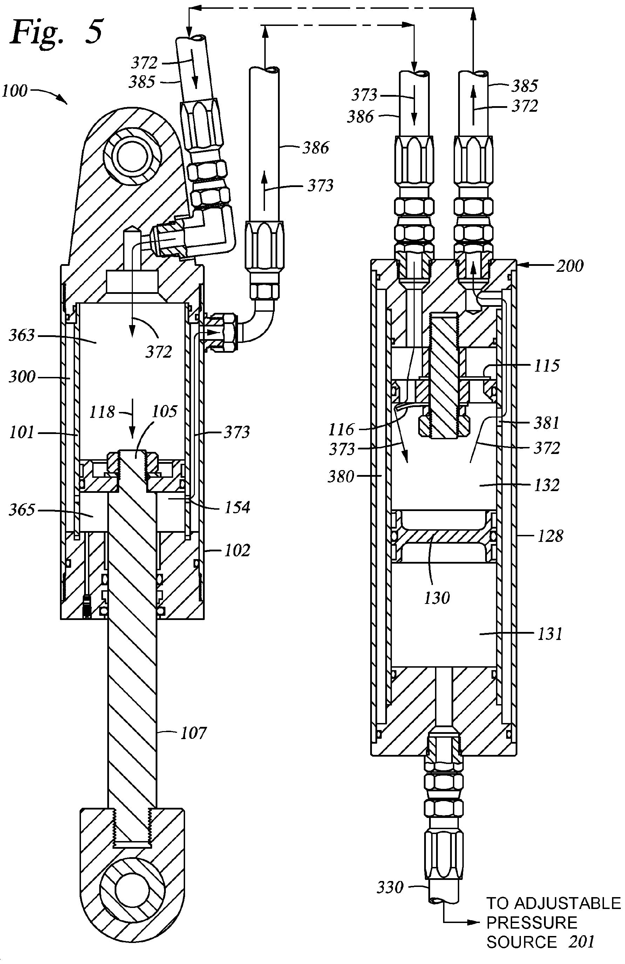

Referring to Figure 5, an illustration of a rebound stroke, the shaft 107 is moving out of the chambers 365, 363 as shown by directional arrow 118. As illustrated, fluid flow directions are generally reversed from those shown in the compression stroke of Figure 4. In particular, fluid exits the reservoir 125 along a path 372 that utilizes annular space 380 and port 381. The exiting fluid 372 returns to the main dampening cylinder 102 via annular area 300 and port 154 that leads to the rebound side 365 of the chamber. Rebound fluid enters the reservoir 125 via path 373 and passes through shims 116 in valve assembly 200 where it is metered.

In one embodiment, portion 131 of the chamber 128 comprises a compressible fluid such as a gas. In one embodiment an initial static pressure of the gas is set between 150 and 250 psi. The pressurizable portion 131 is in fluid communication with a connection member 330 and an adjustable pressure source (not shown but noted by "201"). The resistance of the shock absorber's increasing compression can be altered as desired by adjusting the pressure using the adjustable pressure source 201. If the source pressure is decreased, the shock absorber will be relatively easier to compress and if the source pressure is increased, the shock absorber will be more resistant to compression.

The source pressure can be increased for example, when a shock absorber-equipped vehicle is operated on relatively smooth surface such as a paved road and stiffness is more useful for good handling than compliance. Conversely, if a so-equipped vehicle is operated off-road, compliant travel may be more desirable and the source pressure would be correspondingly decreased. It is noteworthy that absent any adjustment of the source pressure, the increasing resistance of the damper based on compression of portion 131 is dependent primarily on the position of the shock in its travel (e.g. position dependent characteristic). As stated, the position / rigidity function associated with portion 131 and the damping fluid pressure can be selectively altered and tailored by adjusting a pressure of the adjustable pressure source 201.

In one embodiment, the source pressure is adjustable by an operator of a vehicle. For example, an on board source of compressed air can be used to add pressurized gas to portion 131 in varying amounts either by a switch in the vehicle compartment or as will be explained, in an automated fashion based upon vehicle or terrain conditions. Similarly, pressure can be removed from portion 131 as needed.

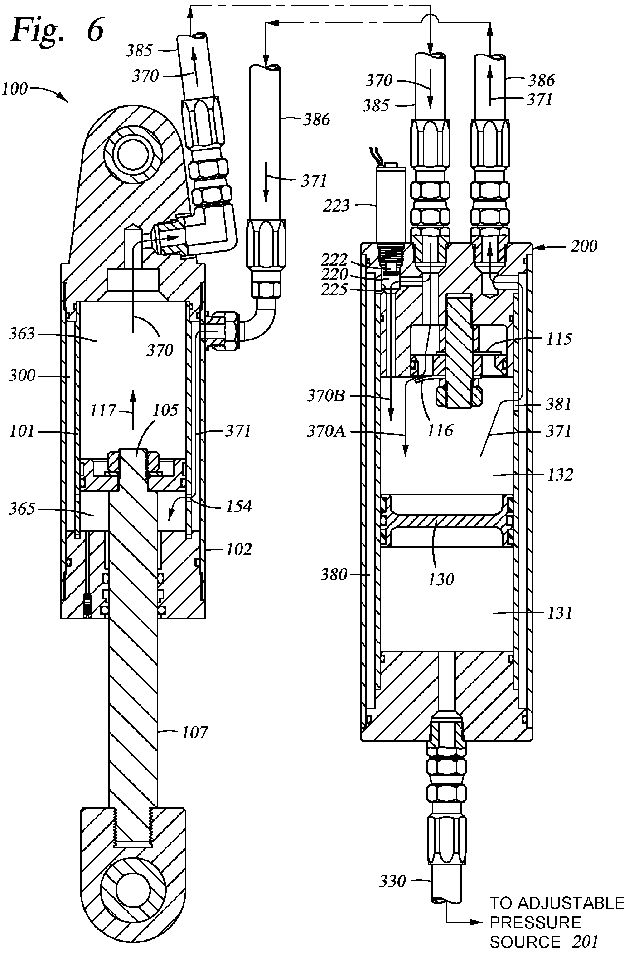

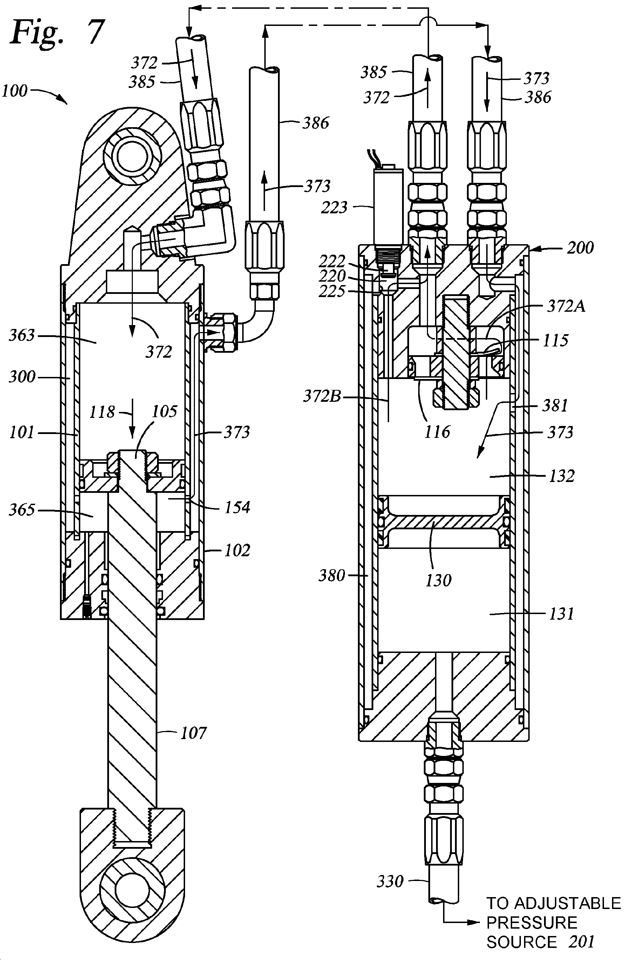

Figures 6 and 7 illustrate a shock absorber that is similar to the shock absorber of Figures 4 and 5 in some respects and similar to the embodiments of Figures 1 through 3 in other respects. In the embodiment of Figures 6 and 7, however, the valve assembly 200 includes a remotely-operable valve 220 in addition to shims 115, 116 in order to permit additional and more responsive dampening control. For example, in Figure 6 the compression flow 370 travels out of chamber 363 through line 385 and into reservoir 125. Upon entering reservoir 125, the compression flow path 370 is divided into two separate paths 370A, 370B, either or both of which can be used to control dampening. Path 370A travels through shims 116, like the shims of the other embodiments. Path 370B however, travels through a remotely-operable valve 220 consisting of a plunger 222 and seat 225. Valve 220 is shown in an open position permitting fluid flow therethrough and in doing so, providing a bypass around the dampening effects of the shims 116. Return fluid travels along a path 371 from fluid portion 132 through port 381, annular area 380 and on to the rebound portion 365 of main dampening chamber 102, via return line 386.

Figure 7 illustrates the operation of the damper of Figure 6 in a rebound stroke. As piston 105 retracts (in direction shown by arrow 118), fluid from the rebound portion 365 of the main cylinder 102 utilizes port 154 and annular area 300 to exit cylinder along a path 373. As the rebound fluid enters the reservoir, it utilizes annular area 380 and port 381 to enter fluid portion 132. From portion 132, the exiting fluid flow is divided into two paths 372A and 372B. Path 372A takes the fluid through shims 115 and path 372 B takes part of the fluid through remotely-operable valve 220. As in the case of the compression stroke, the remotely-operable valve 220, in its open position as shown, reduces rebound dampening by providing a bypass around shims 115. While valve 220 is shown in Figures 6 and 7 in a fully open position, it will be understood that the valve could be closed or could assume any number of partially-open positions depending upon the requirements of a vehicle and /or terrain and an operator's needs. In one embodiment, the valve assembly 200 is configured with a boost type position sensitive valve as shown and described in United States patent application serial number 12/509,258 which is entirely incorporated herein by reference. In one embodiment the damping shims of the damping piston are selectively adjustable. In one embodiment the shims of the damping piston are fixed.

As in other embodiments, the remotely-operable valve 220 may be solenoid operated (as illustrated in Figures 6 and 7 with solenoid 223) or hydraulically operated or pneumatically operated or operated by any other suitable motive mechanism. The valve may be operated remotely by a switch or potentiometer located in the cockpit of a vehicle or attached to appropriate operational parts of a vehicle for timely activation (e.g. brake pedal) or may be operated in response to input from a microprocessor (e.g. calculating desired settings based on vehicle acceleration sensor data) or any suitable combination of activation means. In like manner, a controller for the adjustable pressure source (or for both the source and the valve) may be cockpit mounted and may be manually adjustable or microprocessor controlled or both or selectively either.

It may be desirable to increase the damping rate when moving a vehicle from off-road to on highway use. Off-road use often requires a high degree of compliance to absorb shocks imparted by the widely varying terrain. On highway use, particularly with long wheel travel vehicles, often requires more rigid shock absorption to allow a user to maintain control of a vehicle at higher speeds. This may be especially true during cornering or braking

One embodiment comprises a four wheeled vehicle having solenoid valve equipped shock absorbers at each (of four) wheel. The solenoid valve (which in one embodiment is cable operated instead of solenoid operated) of each of the front shock absorbers may be electrically connected with a linear switch (such as that which operates an automotive brake light) that is activated in conjunction with the vehicle brake pedal. When the brake pedal is depressed beyond a certain distance, corresponding usually to harder braking and hence potential for vehicle nose dive, the electric switch connects a power supply to the normally open solenoid in each of the front shocks thereby closing the paths 8SA in those shocks. As such the front shocks become more rigid during hard braking. Other mechanisms may be used to trigger the shocks such as accelerometers (e.g. tri-axial) for sensing pitch and roll of the vehicle and activating, via a microprocessor, the appropriate solenoid valves for optimum vehicle control.

In one embodiment, a vehicle steering column includes right turn and left turn limit switches such that a hard turn in either direction activates (e.g. closes path 8SA) the solenoid on the shocks opposite that direction (for example a hard right turn would cause more rigid shocks on the vehicle left side). Again, accelerometers in conjunction with a microprocessor and a switched power supply may perform the solenoid activation function by sensing the actual g-force associated with the turn (or braking; or throttle acceleration for the rear shock activation) and triggering the appropriate solenoid(s) at a preset threshold g-force.

In one embodiment, a pressure intensifier damper arrangement may be located within the fluid path such that the solenoid-controlled valve controls flow through that auxiliary damper which is then additive with the damper mechanism of the damping piston. In one embodiment the damper mechanism of the damping piston comprises a pressure intensifier. In one embodiment one or both of the dampers comprise standard shim type dampers. In one embodiment one or both of the dampers include an adjustable needle for low speed bleed. In one embodiment a blow off (e.g. checking poppet type or shim) is included in one of the flow paths or in a third parallel flow path.

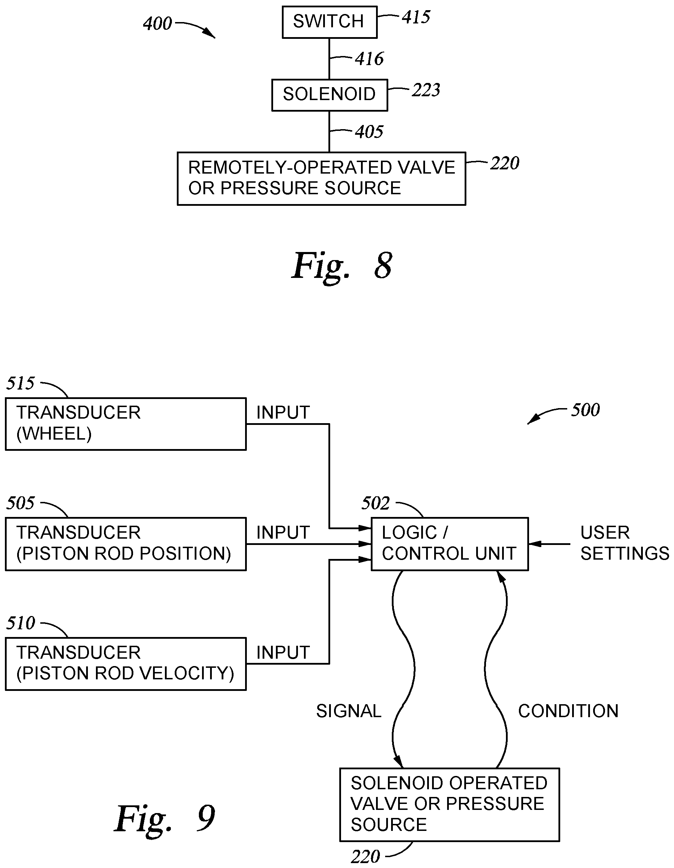

Figure 8 is a schematic diagram showing a control arrangement 400 for a remotely-operated valve, like valve 220 described herein or in one embodiment, the pressure source 201. As illustrated, a signal line 416 runs from a switch 415 to a solenoid 223 along an electrically conductive line 416. Thereafter, the solenoid 223 converts electrical energy into mechanical movement (identified by item 405) and shifts a plunger of the valve 220, thereby opening or closing the valve or causing the plunger to assume some predetermined position in-between. While Figure 8 is simplified and involves control of a single bypass valve 220, it will be understood that any number of valves could be operated simultaneously or separately depending upon needs in a vehicular suspension system. Additional switches could permit individual operation of separate remotely-operable valves 220.

As discussed, a remotely-operable valve 220 or a remotely operated pressure source 201 like the one described above is particularly useful with an on- / off-road vehicle. These vehicles can have as more than 20" of shock absorber travel to permit them to negotiate rough, uneven terrain at speed with usable shock absorbing function. In off-road applications, compliant dampening is necessary as the vehicle relies on its long travel suspension when encountering often large off-road obstacles. Operating a vehicle with very compliant, long travel suspension on a smooth road at higher speeds can be problematic due to the springiness / sponginess of the suspension and corresponding vehicle handling problems associated with that (e.g. turning roll, braking pitch). Such compliance can cause reduced handling characteristics and even loss of control. Such control issues can be pronounced when cornering at high speed as a compliant, long travel vehicle may tend to roll excessively. Similarly, such a vehicle may pitch and yaw excessively during braking and acceleration. With the remotely-operated bypass dampening and "lock out" described herein, dampening characteristics of a shock absorber can be completely changed from a compliantly dampened "springy" arrangement to a highly dampened and "stiffer" (or fully locked out) system ideal for higher speeds on a smooth road. In one embodiment, where compression flow through the piston 105 is completely blocked, closure of the valve 220 can result in substantial "lock out" of the suspension (the suspension is rendered essentially rigid except for the movement of fluid through shimmed valve 210). In one embodiment, where some compression flow is allowed through the piston 105 or the annular bypass 150, closure of the valve 220 results in a stiffer but still functional compression damper.

In addition to, or in lieu of, the simple, switch operated remote arrangement of Figure 8, the remotely-operable valve 220 can be operated automatically based upon one or more driving conditions. Figure 9 shows a schematic diagram of a remote control system 500 based upon any or all of vehicle speed, damper rod speed, and damper rod position. One embodiment of the arrangement of Figure 9 is designed to automatically increase dampening in a shock absorber in the event a damper rod reaches a certain velocity in its travel towards the bottom end of a damper at a predetermined speed of the vehicle. In one embodiment, the system 500 adds dampening (and control) in the event of rapid operation (e.g. high rod velocity) of the damper to avoid a bottoming out of the damper rod as well as a loss of control that can accompany rapid compression of a shock absorber with a relative long amount of travel. In one embodiment, the system 500 adds dampening (e.g. closes or throttles down the bypass) in the event that the rod velocity in compression is relatively low but the rod progresses past a certain point in the travel. Such configuration aids in stabilizing the vehicle against excessive low-rate suspension movement events such as cornering roll, braking and acceleration yaw and pitch and "g-out. "

Figure 9 illustrates, for example, a system 500 including three variables: rod speed, rod position and vehicle speed. Any or all of the variables shown may be considered by logic unit 502 in controlling the solenoids of valves 220 or control of a remotely operated pressure source. Any other suitable vehicle operation variable may be used in addition to or in lieu of the variables 515, 505, 510 such as, for example, piston rod compression strain, eyelet strain, vehicle mounted accelerometer (or tilt / inclinometer) data or any other suitable vehicle or component performance data. In one embodiment, piston 105's position within cylinder 102 is determined using an accelerometer to sense modal resonance of cylinder 102. Such resonance will change depending on the position of the piston 105 and an on-board processor (computer) is calibrated to correlate resonance with axial position. In one embodiment, a suitable proximity sensor or linear coil transducer or other electromagnetic transducer is incorporated in the dampening cylinder 102 to provide a sensor to monitor the position and/or speed of the piston 105 (and suitable magnetic tag) with respect to the cylinder 102. In one embodiment, the magnetic transducer includes a waveguide and a magnet, such as a doughnut (toroidal) magnet that is joined to the cylinder and oriented such that the magnetic field generated by the magnet passes through the piston rod 107 and the waveguide. Electric pulses are applied to the waveguide from a pulse generator that provides a stream of electric pulses, each of which is also provided to a signal processing circuit for timing purposes. When the electric pulse is applied to the waveguide, a magnetic field is formed surrounding the waveguide. Interaction of this field with the magnetic field from the magnet causes a torsional strain wave pulse to be launched in the waveguide in both directions away from the magnet. A coil assembly and sensing tape is joined to the waveguide. The strain wave causes a dynamic effect in the permeability of the sensing tape which is biased with a permanent magnetic field by the magnet. The dynamic effect in the magnetic field of the coil assembly due to the strain wave pulse, results in an output signal from the coil assembly that is provided to the signal processing circuit along signal lines. By comparing the time of application of a particular electric pulse and a time of return of a sonic torsional strain wave pulse back along the waveguide, the signal processing circuit can calculate a distance of the magnet from the coil assembly or the relative velocity between the waveguide and the magnet. The signal processing circuit provides an output signal, either digital or analog, proportional to the calculated distance and/or velocity. A transducer-operated arrangement for measuring rod speed and velocity is described in U.S. Patent No. 5,952,823 and that patent is incorporated by reference herein in its entirety.

While a transducer assembly located at the damper measures rod speed and location, a separate wheel speed transducer for sensing the rotational speed of a wheel about an axle includes housing fixed to the axle and containing therein, for example, two permanent magnets. In one embodiment, the magnets are arranged such that an elongated pole piece commonly abuts first surfaces of each of the magnets, such surfaces being of like polarity. Two inductive coils having flux-conductive cores axially passing therethrough abut each of the magnets on second surfaces thereof, the second surfaces of the magnets again being of like polarity with respect to each other and of opposite polarity with respect to the first surfaces. Wheel speed transducers are described in U.S. Patent No. 3,986,118 which is incorporated herein by reference in its entirety.

In one embodiment, as illustrated in Figure 9, the logic unit 502 with user-definable settings receives inputs from the rod speed 510 and location 505 transducers as well as the wheel speed transducer 515. The logic unit 502 is user-programmable and depending on the needs of the operator, the unit records the variables and then if certain criteria are met, the logic circuit sends its own signal to the bypass to either close or open (or optionally throttle) the remotely-operable valve 220. Thereafter, the condition of the bypass valve is relayed back to the logic unit 502.

In one embodiment, the logic shown in Figure 9 assumes a single damper but the logic circuit is usable with any number of dampers or groups of dampers. For instance, the dampers on one side of the vehicle can be acted upon while the vehicles other dampers remain unaffected.

While the examples illustrated relate to manual operation and automated operation based upon specific parameters, the remotely-operated valve 220 (with or without valve 210 in valve assembly 200) or the remote operation of pressure source 201 can be used in a variety of ways with many different driving and road variables. In one example, the valve 220 is controlled based upon vehicle speed in conjunction with the angular location of the vehicle's steering wheel. In this manner, by sensing the steering wheel turn severity (angle of rotation), additional dampening can be applied to one damper or one set of dampers on one side of the vehicle (suitable for example to mitigate cornering roll) in the event of a sharp turn at a relatively high speed. In another example, a transducer, such as an accelerometer, measures other aspects of the vehicle's suspension system, like axle force and/or moments applied to various parts of the vehicle, like steering tie rods, and directs change to the bypass valve positioning in response thereto. In another example, the bypass can be controlled at least in part by a pressure transducer measuring pressure in a vehicle tire and adding dampening characteristics to some or all of the wheels in the event of, for example, an increased or decreased pressure reading. In one embodiment, the damper bypass or bypasses are controlled in response to braking pressure (as measured, for example, by a brake pedal sensor or brake fluid pressure sensor or accelerometer). In still another example, a parameter might include a gyroscopic mechanism that monitors vehicle trajectory and identifies a "spin-out" or other loss of control condition and adds and/or reduces dampening to some or all of the vehicle's dampers in the event of a loss of control to help the operator of the vehicle to regain control.

While the foregoing is directed to embodiments of the invention, other and further embodiments of the invention may be devised without departing from the basic scope thereof, and the scope thereof is determined by the claims that follow.

## Claims

1. A vehicle damper (100) comprising:
a cylinder (102) and a piston (105), the piston dividing the cylinder into a compression portion (104) and a rebound portion (103);
a working fluid within the cylinder;
a reservoir (125) in fluid communication with the working fluid, the reservoir operable to receive working fluid from the compression portion (104) of the cylinder (102) in a compression stroke; and
a first valve (220) that is remotely-operable; and
a second valve (210) for restricting the flow of working fluid from the compression portion (104) into the reservoir (125),
**characterized in that** the first valve operable to permit and restrict flow of the working fluid between the compression portion (104) and the reservoir (125);
and **in that** the first valve provides a bypass for said fluid flow around the second valve (210), the permitting or restricting of fluid flow around the bypass controllable according to remote operation of the first valve.

2. The damper of claim 1, wherein the reservoir (125) includes a housing, the housing enclosing a fluid portion of the reservoir and the first valve (220).

3. The damper of claim 2, wherein the second valve (210) is also enclosed in the housing.

4. The damper of claim 1, 2 or 3, wherein the first valve (220) includes a valve member (222) and a valve seat (225) for opening and closing a fluid path through the first valve (220) along said bypass, and optionally wherein the first valve is openable to a plurality of positions between a fully opened and a closed position.

5. The damper of any preceding claim, further including a passageway through the piston (105) for limiting a flow rate of the working fluid through the piston in at least one direction, and optionally further including a piston bypass (150) whereby at least some of the working fluid moves from one side of the piston to a second side thereof without utilizing the passageway through the piston.

6. The damper of any of claims 1 to 4, wherein the piston (105) is solid with no passageway therethrough.

7. The damper of claim 6, the arrangement being such that, in use, said working fluid is forced to travel via said reservoir (125) when moving from one side of said piston (105) to the other in compression and re-bound.

8. The damper of claim 3, or any claim dependent directly or indirectly thereon, wherein the first valve (220) and the second valve (210) each define an independent fluid pathway into the fluid portion of the reservoir (125), and optionally wherein the second valve (210) includes shims (116; 212) for restricting fluid flow therethrough.

9. The damper of any preceding claim, wherein the first valve (220) is controllable from a location of an operator in the vehicle, and optionally wherein control is by a manually operable switch having at least two positions, and optionally wherein the switch is located in a passenger compartment of a vehicle.

10. The damper of any preceding claim, wherein control of the first valve (220) is by an electrically operated solenoid (223), or is hydraulic, or is pneumatic.

11. The damper of claim 4, or any claim dependent directly or indirectly thereon, wherein the first valve (220) is operable automatically based upon one of a terrain or vehicle operation variable.

12. The damper of claim 10, further including a load transducer for sensing piston rod force created by the damper piston rod (107).

13. The damper of claim 10 or 11, further comprising a transducer (515) arranged to measure an angle associated with the steering wheel of a vehicle.

14. The damper of any preceding claim, wherein said first valve (220) and said second valve (210) are arranged to permit and restrict flow of working fluid both in compression and rebound of the damper.

15. A vehicle comprising a vehicle damper as claimed in any of claims 1 to 13.

## Patentansprüche

1. Ein Fahrzeugdämpfer (100), umfassend:
einen Zylinder (102) und einen Kolben (105), wobei der Kolben den Zylinder in einen Kompressionsabschnitt (104) und einen Expansionsabschnitt (103) unterteilt;
ein Arbeitsfluid innerhalb des Zylinders;
ein Reservoir (125) in Fluidverbindung mit dem Arbeitsfluid, wobei das Reservoir so betreibbar ist, dass es in einem Kompressionshub Arbeitsfluid von dem Kompressionsabschnitt (104) des Zylinders (102) aufnimmt; und
ein erstes Ventil (220), das fernbetätigbar ist; und
ein zweites Ventil (210) zum Begrenzen des Stroms von Arbeitsfluid von dem Kompressionsabschnitt (104) in das Reservoir (125),
**dadurch gekennzeichnet, dass** das erste Ventil so betätigbar ist, dass es den Strom des Arbeitsfluids zwischen dem Kompressionsabschnitt (104) und dem Reservoir (125) zulässt und begrenzt; und
dass das erste Ventil einen Bypass für den Fluidstrom an dem zweiten Ventil (210) vorbei bereitstellt, wobei das Zulassen oder Begrenzen des Fluidstroms an dem Bypass vorbei entsprechend der Fernbetätigung des ersten Ventils steuerbar ist.

2. Dämpfer nach Anspruch 1, wobei das Reservoir (125) ein Gehäuse aufweist, wobei das Gehäuse einen Fluidteil des Reservoirs und das erste Ventil (220) einschließt.

3. Dämpfer nach Anspruch 2, wobei das zweite Ventil (210) ebenfalls in dem Gehäuse eingeschlossen ist.

4. Dämpfer nach Anspruch 1, 2 oder 3, wobei das erste Ventil (220) ein Ventilelement (222) und einen Ventilsitz (225) aufweist zum Öffnen und Schließen eines Fluidweges durch das erste Ventil (220) entlang des Bypasses, und wahlweise wobei das erste Ventil in eine Vielzahl von Positionen zwischen einer vollständig geöffneten und einer geschlossenen Position öffenbar ist.

5. Dämpfer nach einem der vorangegangenen Ansprüche, des Weiteren aufweisend einen Durchgang durch den Kolben (105) zum Begrenzen eines Durchflusses des Arbeitsfluids durch den Kolben in mindestens eine Richtung, und wahlweise des Weiteren aufweisend einen Kolbenbypass (150), wodurch sich mindestens ein Teil des Arbeitsfluids von einer Seite des Kolbens zu einer zweiten Seite davon bewegt, ohne den Durchgang durch den Kolben zu nutzen.

6. Dämpfer nach einem der Ansprüche 1 bis 4, wobei der Kolben (105) massiv ist und keinen Durchgang durch ihn hindurch aufweist.

7. Dämpfer nach Anspruch 6, wobei die Anordnung so beschaffen ist, dass das Arbeitsfluid bei der Verwendung gezwungen ist, sich über das Reservoir (125) zu bewegen, wenn es sich bei Kompression und Expansion von einer Seite des Kolbens (105) zu der anderen bewegt.

8. Dämpfer nach Anspruch 3 oder einem davon direkt oder indirekt abhängigen Anspruch, wobei das erste Ventil (220) und das zweite Ventil (210) jeweils einen unabhängigen Fluidweg in das Fluidteil des Reservoirs (125) definieren, und wahlweise wobei das zweite Ventil (210) Ausgleichsscheiben (116; 212) zum Begrenzen des Fluidstroms durch es hindurch aufweist.

9. Dämpfer nach einem der vorangegangenen Ansprüche, wobei das erste Ventil (220) von einem Standort eines Bedieners in dem Fahrzeug aus steuerbar ist, und wahlweise wobei die Steuerung durch einen manuell betätigbaren Schalter erfolgt, der zumindest zwei Positionen aufweist, und wahlweise wobei der Schalter in einem Fahrgastraum eines Fahrzeugs angeordnet ist.

10. Dämpfer nach einem der vorangegangenen Ansprüche, wobei die Steuerung des ersten Ventils (220) durch eine elektrisch betätigte Magnetspule (223) erfolgt oder hydraulisch oder pneumatisch ist.

11. Dämpfer nach Anspruch 4 oder einem davon direkt oder indirekt abhängigen Anspruch, wobei das erste Ventil (220) automatisch auf der Grundlage einer Gelände- oder Fahrzeugbetriebsvariablen betätigbar ist.

12. Dämpfer nach Anspruch 10, des Weiteren aufweisend einen Kraftaufnehmer zum Erfassen der von der Dämpferkolbenstange (107) erzeugten Kolbenstangenkraft.

13. Dämpfer nach Anspruch 10 oder 11, des Weiteren umfassend einen Wandler (515), der zur Messung eines dem Lenkrad eines Fahrzeugs zugeordneten Winkels angeordnet ist.

14. Dämpfer nach einem der vorangegangenen Ansprüche, wobei das erste Ventil (220) und das zweite Ventil (210) so angeordnet sind, dass sie den Strom des Arbeitsfluids sowohl bei der Kompression als auch bei der Expansion des Dämpfers zulassen und begrenzen.

15. Fahrzeug umfassend einen Fahrzeugdämpfer nach einem der Ansprüche 1 bis 13.

## Revendications

1. Amortisseur de véhicule (100) comprenant :
un vérin (102) et un piston (105), le piston divisant le vérin en une portion de compression (104) et une portion de rebond (103) ;
un fluide de travail au sein du vérin ;
un réservoir (125) en communication fluidique avec le fluide de travail, le réservoir étant opérationnel pour recevoir du fluide de travail en provenance de la portion de compression (104) du vérin (102) dans une course de compression ; et
une première soupape (220) qui est opérationnelle à distance ; et
une seconde soupape (210) pour restreindre l'écoulement de fluide de travail depuis la portion de compression (104) jusque dans le réservoir (125),
**caractérisé en ce que** la première soupape est opérationnelle pour autoriser et restreindre un écoulement du fluide de travail entre la portion de compression (104) et le réservoir (125) ;
et **en ce que** la première soupape fournit une dérivation pour ledit écoulement de fluide autour de la seconde soupape (210), l'autorisation ou la limitation d'écoulement de fluide autour de la dérivation pouvant être commandée selon un fonctionnement à distance de la première soupape.

2. Amortisseur selon la revendication 1, dans lequel le réservoir (125) comporte un logement, le logement renfermant une portion de fluide du réservoir et la première soupape (220).

3. Amortisseur selon la revendication 2, dans lequel la seconde soupape (210) est également renfermée dans le logement.

4. Amortisseur selon la revendication 1, 2 ou 3, dans lequel la première soupape (220) comporte un organe de soupape (222) et un siège de soupape (225) pour ouvrir et fermer un trajet de fluide à travers la première soupape (220) le long de ladite dérivation, et dans lequel facultativement la première soupape peut s'ouvrir à une pluralité de positions entre une position totalement ouverte et une position fermée.

5. Amortisseur selon l'une quelconque des revendications précédentes, comportant en outre une voie de passage à travers le piston (105) pour limiter un débit du fluide de travail à travers le piston dans au moins une direction, et comportant en outre facultativement une dérivation de piston (150) moyennant quoi au moins une partie du fluide de travail se déplace d'un côté du piston à un second côté de celui-ci sans utiliser la voie de passage à travers le piston.

6. Amortisseur selon l'une quelconque des revendications 1 à 4, dans lequel le piston (105) est plein sans voie de passage au travers.

7. Amortisseur selon la revendication 6, l'agencement étant tel que, en utilisation, ledit fluide de travail est amené de force à circuler via ledit réservoir (125) lorsqu'il se déplace d'un côté dudit piston (105) à l'autre en compression et rebond.

8. Amortisseur selon la revendication 3, ou toute revendication dépendant directement ou indirectement de celle-ci, dans lequel la première soupape (220) et la seconde soupape (210) définissent chacune une voie de fluide indépendante dans la portion de fluide du réservoir (125), et dans lequel facultativement la seconde soupape (210) comporte des cales (116 ; 212) pour restreindre un écoulement de fluide au travers.

9. Amortisseur selon l'une quelconque des revendications précédentes, dans lequel la première soupape (220) peut être commandée depuis un emplacement d'un opérateur dans le véhicule, et dans lequel facultativement une commande se fait par un commutateur à commande manuelle ayant au moins deux positions, et dans lequel facultativement le commutateur est situé dans un habitacle passager d'un véhicule.

10. Amortisseur selon l'une quelconque des revendications précédentes, dans lequel une commande de la première soupape (220) se fait par un solénoïde actionné électriquement (223), ou est hydraulique, ou est pneumatique.

11. Amortisseur selon la revendication 4, ou toute revendication dépendant directement ou indirectement de celle-ci, dans lequel la première soupape (220) est opérationnelle automatiquement d'après l'une d'une variable de terrain ou de fonctionnement de véhicule.

12. Amortisseur selon la revendication 10, comportant en outre un transducteur de charge pour détecter une force de tige de piston créée par la tige de piston d'amortisseur (107).

13. Amortisseur selon la revendication 10 ou 11, comprenant en outre un transducteur (515) agencé pour mesurer un angle associé à la roue directrice d'un véhicule.

14. Amortisseur selon l'une quelconque des revendications précédentes, dans lequel ladite première soupape (220) et ladite seconde soupape (210) sont agencées pour autoriser et limiter un écoulement de fluide de travail à la fois en compression et en rebond de l'amortisseur.

15. Véhicule comprenant un amortisseur de véhicule selon l'une quelconque des revendications 1 à 13.
